# EUROPEAN PATENT SPECIFICATION

(11) **EP 1 870 317 B1**
(45) Date of publication and mention of the grant of the patent: **10.02.2010**
(21) Application number: 06115662.6
(22) Date of filing: 19.06.2006
(51) Int. Cl.: B62D 21/15, B60K 5/12

(54) **Suspension for a motor vehicle power plant**
Aufhängung eines Kraftfahrzeugantriebsystems
Suspension de system d'entraînement d'un véhicule

(43) Date of publication of application: 26.12.2007
(73) Proprietor: Ford Global Technologies, LLC, Dearborn, MI 48126 (US)
(72) Inventor: Stoddart, Tom, 411 34, Göteborg (SE)
(74) Representative: Valea AB

(56) References cited:
- WO-A-98/09863
- DE-A1- 2 246 077
- DE-A1- 19 608 196
- DE-A1- 19 654 571
- US-A- 5 466 033
- US-A- 5 868 457

## Description

### TECHNICAL FIELD

The present invention is related to a suspension for a front, transversely mounted, motor vehicle power plant that is arranged in an automotive frame structure between two front side members in accordance with the preamble of claim 1.

The present invention further relates to a method of suspending a front, transversely mounted, motor vehicle power plant in an automotive frame structure between two front side members in accordance with the preamble of claim 6.

### BACKGROUND OF THE INVENTION

The present invention relates to suspensions for power plants in motor vehicles. The engine, or power plant, i.e. engine and transmission, is usually mounted into the front structure of a vehicle. In normal use, the front structure should be strong to resist large loads from engine movements and stiff so as to benefit ride and handling of the vehicle.

The engine mounts in vehicles usually comprise rubber isolators arranged to damp engine vibration, but are also arranged to act as a stop in order to limit engine movement in all directions, so as to avoid unwanted contact between the engine and other components. This absorption of abuse loads is called snubbing and these abuse loads are the highest loads an engine mounting should withstand. In a transverse installation, the loads in the longitudinal direction of the vehicle are the largest.

In a motor vehicle crash, the front structure and particularly the front side members of the motor vehicle should collapse and crumple in a controlled manner to absorb the energy of the crash. In order for the crash energy to be absorbed without intrusion to the passenger compartment, the strength of the car needs to be progressive i.e. the front structure needs to be weaker than the passenger compartment. A conflict therefore is that the front structure needs to be strong in everyday use but weaker in a crash, and this is particularly true of the engine mounting area.

The efficiency of a motor vehicle crash structure can be further impaired by so called stack-up. Stack-up can occur in a number of ways e.g. through engine shortcutting and through the occurrence of so called dead material. In more depth, a side member cannot collapse in the area between the front of the engine and the point at which the engine is attached, that area of the side member is effectively shortcut, causing deformation behind the engine mount through the impact forces being transported through the engine. Furthermore, an axially crushed column collapses and buckles progressively but the deformed material stacks up to a relatively solid mass, which in the case of the side member may become stronger than the structure behind it, potentially causing intrusion into the passenger compartment.

WO 9809863 discloses a system in which the drive assembly becomes separated from one or both side members on any type of front impact, irrespective of the type of drive and the mounting direction. Since the side members are no longer exposed to the kinetic energy of the drive assembly, whilst retaining the same dimensions, they can either absorb more front impact energy, or be designed such that they are less rigid and more lightweight. At least one pair of independently operating piston devices in the front section of the vehicle body releases the drive assembly for rotation in the event of any front collision.

Although WO 9809863 discloses engine mounts that break away at a certain load in the longitudinal direction of the vehicle one difficulty is that the breakaway load must be safely higher than the maximum abuse load. However, as these loads for a front, transversely mounted, motor vehicle power plant may be of the same magnitude the usefulness of this kind of arrangement therefore is limited.

DE 196 08 196 discloses a suspension for a front mounted motor vehicle power plant according to the preamble of claim 1 and a method according to the preamble of claim 6.

### SUMMARY OF THE INVENTION

An object of the present invention is to provide an improved suspension for a front, transversely mounted, motor vehicle power plant that is arranged in an automotive frame structure between two front side members.

According to a first aspect of the present invention this object is achieved in accordance with the features of claim 1.

A further object of the present invention is to provide an improved method of suspending a front, transversely mounted, motor vehicle power plant in an automotive frame structure between two front side members.

According to a second aspect of the present invention this object is achieved in accordance with the features of claim 6.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is a schematic illustration of a suspension for a front, transversely mounted, motor vehicle power plant that is arranged in an automotive frame structure between two front side members prior to a front end collision;
Figure 2 is a schematic illustration of the suspension in accordance with figure 1 after the occurrence of a front end collision.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The invention concerns a suspension in which a power plant assembly of a motor vehicle becomes separated from one or more side members of an automotive frame structure on any type of front impact. Since after such separation the side members are no longer exposed to the kinetic energy of the power plant assembly, whilst retaining the same dimensions, they are able to absorb more front impact energy, thus providing an improved protection for an associated passenger compartment of the vehicle.

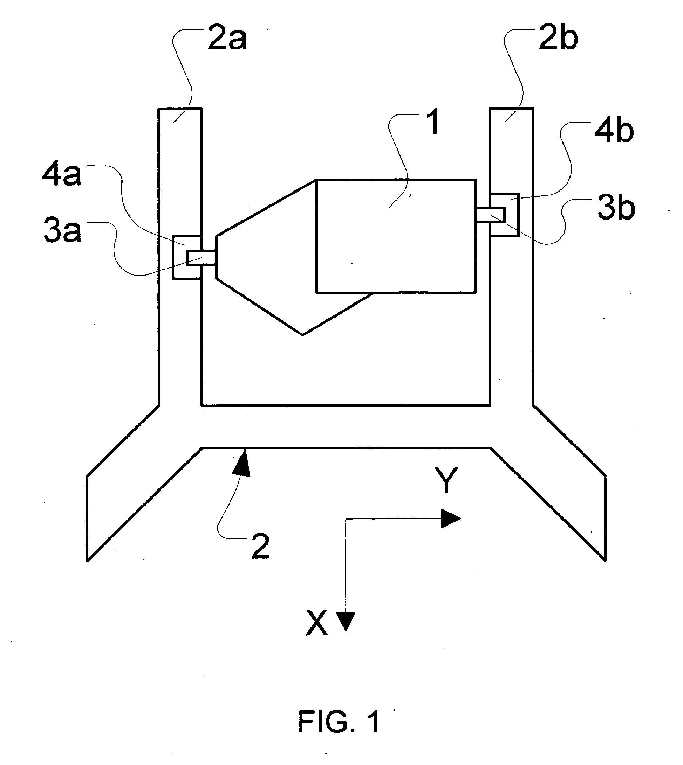

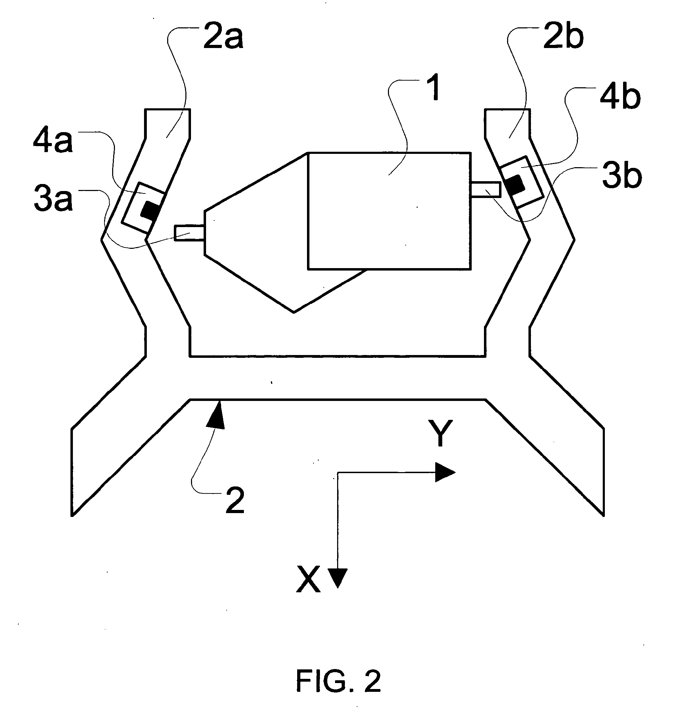

Particularly with single tie bar pendulum engine suspensions, the engine mounts on the side members are subjected to high service abuse loads, particularly in the longitudinal direction of the vehicle, i.e. the ±X direction of figures 1 and 2. In a crash, however, it is desirable to detach the power plant from the body frame structure at as low loads as possible, in order that the respective side member's deformable length is not shortcut by the rigid power plant.

The following scenario illustrates what here is meant by shortcutting. Consider an undeformed structure comprising two side members and a rigid power plant assembly fixedly mounted to these side members and imagine a wall progressing towards the structure. As the imagined wall hits the ends of the side members they would normally begin to deform and collapse in some way. However, as the imagined wall continues and comes into contact with the front of the power plant assembly, the deformation of the side members would stop. The load from the imagined wall would then be transmitted through the rigid power plant assembly via the engine mounts to the side members. The side members would now be susceptible to collapse behind the engine mounts instead, and a section of the respective side member ahead of the mounts would be left unused, and therefore wasted as no energy absorption would occur in these unused sections.

In a preferred first embodiment of the present invention, as shown schematically in figure 1, a suspension for a front, transversely mounted, motor vehicle power plant 1 is arranged in an automotive frame structure 2 between two front side members 2a, 2b. By the motor vehicle power plant is here meant a block or unit comprising at least the engine and gearbox of the vehicle, but the motor vehicle power plant may possibly also comprise further details of the drive train of the vehicle.

A respective resilient engine mount 4a, 4b is arranged at each side member 2a, 2b. The engine mounts 2a, 2b are arranged to receive a respective mounting member or pin 3a, 3b protruding from said motor vehicle power plant 1. The mounting members or pins 3a, 3b are preferably received within a rubber lined cavity arranged within a metal cup or housing. The engine mounts 4a, 4b are arranged to limit motor vehicle power plant 1 movement in a longitudinal direction of the vehicle, i.e. a ±X direction of the vehicle.

The left hand side engine mount 4a is further arranged to limit motion of the motor vehicle power plant 1 in a direction towards the left hand side of the vehicle, i.e. a -Y direction of the vehicle, and the right hand side engine mount 4b is further arranged to limit motion of the motor vehicle power plant 1 in a direction towards the right hand side of the vehicle, i.e. a +Y direction of the vehicle.

Through designing the engine mounts 4a, 4b in this way to give less resistance in the ±Y direction, low breakaway forces can be achieved during crash through at the same time arranging the side members to bend away from the motor vehicle power plant 1 upon being deformed as a result of the crash. Snubbing, i.e. absorption of abuse loads in the Y direction, may then be achieved on the left hand side for-Y movement and on the right hand side for +Y movement. Each mounts' 4a, 4b crash breakaway load is then independent of its robustness in the X direction. An example of how this design could be achieved, taking the left hand side engine mount 4a as an example includes an aluminium cup or cup-shaped housing turned on its side and attached to the side member 2a such that it has its opening facing the motor vehicle power plant 1. A pin or mounting member 3a protruding or coming from the motor vehicle power plant 1 in the -Y direction is fixed into a rubber mounting inside the cup. This mounting member's or pin's 3a motion would then be limited in the -Y direction by the bottom of the cup, achieving snubbing, but the mounting member or pin 3 could pull out in the opposite direction, +Y, at a tuned load which may be very low.

As illustrated in figure 2, each respective side member 2a, 2b is arranged to bend away from the motor vehicle power plant 1, i.e. to bend outwards in the +Y and -Y directions respectively, as a result of crash impact acting upon said respective side member 2a, 2b in essentially the +X direction. As the side members 2a, 2b bend outwards, the respective associated engine mount 4a, 4b is arranged to release from the associated mounting member 3a, 3b, as these do not provide any limitation of the relative motion in this case. That is, the left hand side engine mount 4a does not limit motion of the motor vehicle power plant 1 in a direction towards the right hand side of the vehicle, i.e. a +Y direction of the vehicle, and the right hand side engine mount 4b does not limit motion of the motor vehicle power plant in a direction towards the left hand side of the vehicle, i.e. a -Y direction of the vehicle. Thus the relative motion provided through the side members 2a, 2b bending away from the motor vehicle power plant 1 will cause the mounting members 3a, 3b, to become released from the associated engine mounts 4a, 4b.

The efficiency of the motor vehicle crash structure is improved by the reduction of stack-up provided through causing the side member to fail in overall bending, as indicated above. Through causing the side members 2a, 2b to bend outwards roughly in the area of the engine mounts 4a, 4b upon a frontal impact, the used material is removed such that stack-up is eliminated, allowing more deformation length. A deformation control element (not shown) may be arranged at or within the side members 2a, 2b, or be arranged as an integral part of the side members 2a, 2b, for controlling the location of the bend upon collapse of the side members 2a, 2b.

A more detailed explanation of how bending collapse may be controlled in an elongated structural design component for a vehicle body, such as a side member 2a, 2b can be found in European patent publication EP 1 440 867, the entirety of which is hereby incorporated into the description by reference. This publication discusses how increased energy absorption during bending collapse of the member may be achieved.

In accordance with the present invention snubbing in the ±Y directions is split so that the engine's extreme motion to the left, i.e. the -Y direction, is limited by the left engine mount 4a only. In the same way motion to the right, i.e. the +Y direction, is limited by the right hand side engine mount 4b only. Neither engine mount 4a, 4b offer any snubbing in the opposite directions, i.e. inboards towards the motor vehicle power plant 1, so that when in a crash the side members 4a, 4b bend away from the motor vehicle power plant 1, the mounts 4a, 4b can release from the mounting members 3a, 3b at a very low lateral load. The side members 2a, 2b are thus allowed to deform over their entire length, with no stack-up caused by shortcutting or dead material.

Thus, the suspension for a front, transversely mounted, motor vehicle power plant 1 that is arranged in an automotive frame structure 2 between two front side members 2a, 2b according to the present invention makes it possible to increase the amount of kinetic energy absorbed by side members 2a, 2b during front end crashes so as to reduce intrusion into the passenger compartment and the associated risk of injury.

The present invention further relates to an automotive vehicle comprising a suspension for a front, transversely mounted, motor vehicle power plant 1 that is arranged in an automotive frame structure 2 between two front side members 2a, 2b according to any one of the above described embodiments.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A suspension for a front, transversely mounted, motor vehicle power plant (1) that is arranged in an automotive frame structure (2) between two front side members (2a, 2b), comprising: a respective resilient engine mount (4a, 4b) being arranged at each side member (2a, 2b); said engine mounts (4a, 4b) being arranged to receive a respective mounting member (3a, 3b) protruding from said motor vehicle power plant (1); said engine mounts (4a, 4b) having means for limiting motor vehicle power plant (1) movement in a longitudinal direction (±X) of the vehicle, **characterised in**, the left hand side engine mount (4a) further having means for limiting motion of the motor vehicle power plant (1) in a direction (-Y) towards the left hand side of the vehicle and the right hand side engine mount (4b) further having means for limiting motion of the motor vehicle power plant (1) in a direction (+Y) towards the right hand side of the vehicle, each respective side member (2a, 2b) having means for causing said side members to bend away from the motor vehicle power plant (1) as a result of crash impact acting upon said respective side member (2a, 2b) whereupon the respective associated engine mount (4a, 4b), through absorption of abuse loads in the directions towards the left hand side of the vehicle and the right hand side of the vehicle (±Y) being split so that the extreme motion of the motor vehicle power plant (1) in a direction (-Y) towards the left hand side of the vehicle is limited by the left hand side engine mount (4a) only, and the extreme motion of the motor vehicle power plant (1) in a direction (+Y) towards the right hand side of the vehicle is limited by the right hand side engine mount (4b) only, will cause the mounting members (3a, 3b) to become released from the associated engine mounts (4a, 4b).

2. A suspension according to claim 1, **characterised in** said side members (2a, 2b) having means for causing said side members (2a, 2b) to bend away from the motor vehicle power plant (1) in the area of the engine mounts (4a, 4b) in a lateral (+X) direction of the vehicle as a result of crash impact acting upon said respective side member (2a, 2b).

3. A suspension according to claim 2, **characterised in** said side members (2a, 2b) each comprising an associated deformation control element having means for causing said side members (2a, 2b) to bend away from the motor vehicle power plant (1) in the area of said engine mounts (4a, 4b).

4. A suspension according to any one of claims 1 to 3, **characterised in** said respective engine mounts (4a, 4b) comprising a rubber lined cavity arranged within a metal cup-shaped housing, said cavity being arranged to receive a respective mounting member (3a, 3b) protruding from said motor vehicle power plant (1).

5. An automotive vehicle **characterised in that**: it comprises a suspension for a front, transversely mounted, motor vehicle power plant (1) that is arranged in an automotive frame structure (2) between two front side members (2a, 2b) according to any one of the preceding claims.

6. A method of suspending a front, transversely mounted, motor vehicle power plant (1) in an automotive frame structure (2) between two front side members (2a, 2b), it comprising the steps of: arranging a respective resilient engine mount (4a, 4b) at each side member (2a, 2b); arranging said engine mounts (4a, 4b) to receive a respective mounting member (3a, 3b) protruding from said motor vehicle power plant (1); said engine mounts (4a, 4b) having means for limiting motor vehicle power plant (1) movement in a longitudinal direction (±X) of the vehicle; **characterised in that** the left hand side engine mount (4a) having means for limiting motion of the motor vehicle power plant (1) in a direction (-Y) towards the left hand side of the vehicle and the right hand side engine mount (4b) having means for limiting motion of the motor vehicle power plant (1) in a direction (+Y) towards the right hand side of the vehicle; arranging each respective side member (2a, 2b) with means for causing said side members to bend away from the motor vehicle power plant (1) as a result of crash impact acting upon said respective side member (2a, 2b) whereupon the respective associated engine mount (4a, 4b), through absorption of abuse loads in the directions towards the left hand side of the vehicle and the right hand side of the vehicle (±Y) being split so that the extreme motion of the motor vehicle power plant (1) in a direction (-Y) towards the left hand side of the vehicle is limited by the left hand side engine mount (4a) only, and the extreme motion of the motor vehicle power plant (1) in a direction (+Y) towards the right hand side of the vehicle is limited by the right hand side engine mount (4b) only, will cause the mounting members (3a, 3b) to become released from the associated engine mounts (4a, 4b).

## Patentansprüche

1. Eine Aufhängung für ein vorn quer angebrachtes Kraftfahrzeugantriebssystem (1), die in einer Rahmenkonstruktion (2) eines Automobils zwischen zwei vorderen Seitenteilen (2a, 2b) angebracht ist, umfassend: eine jeweils nachgiebige Motoraufhängung (4a, 4b), die an jedem Seitenteil (2a, 2b) angebracht ist, wobei die Motoraufhängungen (4a, 4b) so angelegt sind, dass sie ein entsprechendes Aufhängungsteil (3a, 3b) aufnehmen können, das aus dem Kraftfahrzeugantriebssystem (1) herausragt, und wobei die Motoraufhängungen (4a, 4b) Mittel zum Einschränken der Bewegung des Kraftfahrzeugantriebssystems (1) in einer Längsrichtung (± X) des Fahrzeugs haben, **dadurch gekennzeichnet, dass** die linke Motoraufhängung (4a) ferner Mittel zum Einschränken der Bewegung des Kraftfahrzeugantriebssystems (1) in eine Richtung (- Y) zur linken Seite des Fahrzeugs hin hat, und dass die rechte Motoraufhängung (4b) ferner Mittel zum Einschränken der Bewegung des Kraftfahrzeugantriebssystems (1) in eine Richtung (+ Y) zur rechten Seite des Fahrzeugs hin hat, wobei jedes jeweilige Seitenteil (2a, 2b) Mittel hat, welche die Seitenteile dazu bringen, sich infolge eines auf das jeweilige Seitenteil (2a, 2b) wirkenden Aufpralls von dem Kraftfahrzeugantriebssystem (1) weg zu biegen, woraufhin die jeweils damit verbundene Motoraufhängung (4a, 4b) die Aufhängungsteile (3a, 3b) dazu bringt, von den ihnen zugeordneten Motoraufhängungen (4a, 4b) gelöst zu werden, indem die Absorption der missbräuchlichen Belastung in Richtung der linken Seite des Fahrzeugs und der rechten Seite des Fahrzeugs (± Y) aufgeteilt wird, so dass die extreme Bewegung des Kraftfahrzeugantriebssystems (1) in eine Richtung (- Y) zur linken Seite des Fahrzeugs lediglich durch die linke Motoraufhängung (4a) begrenzt wird und die extreme Bewegung des Kraftfahrzeugantriebssystems (1) in eine Richtung (+ Y) zur rechten Seite des Fahrzeugs lediglich durch die rechte Motoraufhängung (4b) begrenzt wird.

2. Aufhängung nach Anspruch 1, **dadurch gekennzeichnet, dass** die Seitenteile (2a, 2b) mit Mitteln ausgestattet sind, welche die Seitenteile (2a, 2b) dazu bringen, sich infolge eines auf das jeweilige Seitenteil (2a, 2b) wirkenden Aufpralls im Bereich der Motoraufhängungen (4a, 4b) in eine seitliche Richtung (+ X) des Fahrzeugs vom Kraftfahrzeugantriebssystem (1) weg zu biegen.

3. Aufhängung nach Anspruch 2, **dadurch gekennzeichnet, dass** jedes der Seitenteile (2a, 2b) ein zugeordnetes Element zur Steuerung der Verformung umfasst, das Mittel aufweist, welche die Seitenteile (2a, 2b) dazu bringen, sich im Bereich der Motoraufhängungen (4a, 4b) von dem Kraftfahrzeugantriebssystem (1) weg zu biegen.

4. Aufhängung nach einem der Ansprüche 1 bis 3, **dadurch gekennzeichnet, dass** die jeweiligen Motoraufhängungen (4a, 4b) einen mit Gummi ausgelegten Hohlraum umfassen, der in einem metallenen, napfförmigen Gehäuse angeordnet ist, wobei der Hohlraum so geschaffen ist, dass er ein entsprechendes Aufhängungsteil (3a, 3b) aufnehmen kann, das aus dem Kraftfahrzeugantriebssystem (1) herausragt.

5. Ein Kraftfahrzeug, **dadurch gekennzeichnet, dass** es eine Aufhängung nach einem der vorhergehenden Ansprüche für ein vorn quer angebrachtes Kraftfahrzeugantriebssystem (1) umfasst, die in einer Rahmenkonstruktion (2) eines Automobils zwischen zwei vorderen Seitenteilen (2a, 2b) angebracht ist.

6. Verfahren zum Aufhängen eines vorn quer angebrachten Kraftfahrzeugantriebssystems (1) in einer Rahmenkonstruktion (2) eines Automobils zwischen zwei vorderen Seitenteilen (2a, 2b), umfassend folgende Schritte: Anordnen einer entsprechenden nachgiebigen Motoraufhängung (4a, 4b) an jedem Seitenteil (2a, 2b); Einrichten der Motoraufhängungen (4a, 4b) derart, dass sie jeweils ein Aufhängungsteil (3a, 3b) aufnehmen können, das aus dem Kraftfahrzeugantriebssystem (1) herausragt; wobei die Motoraufhängungen (4a, 4b) Mittel zum Einschränken der Bewegung des Kraftfahrzeugantriebssystems (1) in einer Längsrichtung (± X) des Fahrzeugs haben, **dadurch gekennzeichnet, dass** die linke Motoraufhängung (4a) Mittel zum Einschränken der Bewegung des Kraftfahrzeugantriebssystems (1) in eine Richtung (- Y) zur linken Seite des Fahrzeugs hin hat, und dass die rechte Motoraufhängung (4b) Mittel zum Einschränken der Bewegung des Kraftfahrzeugantriebssystems (1) in eine Richtung (+ Y) zur rechten Seite des Fahrzeugs hin hat; Ausstatten jedes jeweiligen Seitenteils (2a, 2b) mit Mitteln, welche die Seitenteile dazu bringen, sich infolge eines auf das jeweilige Seitenteil (2a, 2b) wirkenden Aufpralls vom Kraftfahrzeugantriebssystem (1) weg zu biegen, woraufhin die jeweils damit verbundene Motoraufhängung (4a, 4b) die Aufhängungsteile (3a, 3b) dazu bringt, von den ihnen zugeordneten Motoraufhängungen (4a, 4b) gelöst zu werden, indem die Absorption der missbräuchlichen Belastung in Richtung der linken Seite des Fahrzeugs und der rechten Seite des Fahrzeugs (± Y) aufgeteilt wird, so dass die extreme Bewegung des Kraftfahrzeugantriebssystems (1) in eine Richtung (- Y) zur linken Seite des Fahrzeugs lediglich durch die linke Motoraufhängung (4a) begrenzt wird und die extreme Bewegung des Kraftfahrzeugantriebssystems (1) in eine Richtung (+ Y) zur rechten Seite des Fahrzeugs lediglich durch die rechte Motoraufhängung (4b) begrenzt wird.

## Revendications

1. Suspension pour un groupe moteur avant (1), monté transversalement, de véhicule automobile, qui est disposé dans une structure (2) de châssis automobile entre deux éléments latéraux avant (2a, 2b), comprenant : un support de moteur résilient respectif (4a, 4b) disposé au niveau de chaque élément latéral (2a, 2b) ; lesdits supports (4a, 4b) de moteur étant prévus pour recevoir un élément de montage respectif (3a, 3b) faisant saillie dudit groupe moteur (1) de véhicule automobile ; lesdits supports (4a, 4b) de moteur possédant des moyens pour limiter le mouvement du groupe moteur (1) de véhicule automobile dans une direction longitudinale (±X) du véhicule, ***caractérisée en ce que*** le support (4a) de moteur côté gauche possède de plus des moyens pour limiter le déplacement du groupe moteur (1) de véhicule automobile en direction (-Y) du côté gauche du véhicule, et le support (4b) de moteur côté droit possède en plus des moyens pour limiter le déplacement du groupe moteur (1) de véhicule automobile en direction (+Y) du côté droit du véhicule, chaque élément latéral respectif (2a, 2b) possédant des moyens pour obliger les éléments latéraux à se courber en s'écartant du groupe moteur (1) de véhicule automobile à la suite du choc d'une collision agissant sur ledit élément latéral respectif (2a, 2b), après quoi le support de moteur associé respectif (4a, 4b), par absorption des charges abusives dans les directions du côté gauche du véhicule et du côté droit du véhicule (±Y) qui sont divisées de telle sorte que le mouvement extrême du groupe moteur (1) de véhicule automobile en direction (-Y) du côté gauche du véhicule soit limité seulement par le support (4a) de moteur côté gauche, et le mouvement extrême du groupe moteur (1) de véhicule automobile en direction (+Y) du côté droit du véhicule soit limité seulement par le support (4b) de moteur côté droit, provoquera la libération des éléments de montage (3a, 3b) des supports de moteur associés (4a, 4b).

2. Suspension selon la revendication 1, ***caractérisée en ce que*** lesdits éléments latéraux (2a, 2b) comportent des moyens pour faire que les éléments latéraux (2a, 2b) se courbent en s'écartant du groupe moteur (1) de véhicule automobile dans la zone des supports (4a, 4b) du moteur dans une direction latérale (+X) du véhicule en résultat du choc d'une collision agissant sur ledit élément latéral respectif (2a, 2b).

3. Suspension selon la revendication 2, ***caractérisée en ce que*** lesdits éléments latéraux (2a, 2b) comprennent chacun un élément associé de contrôle de la déformation comportant des moyens pour faire que les éléments latéraux (2a, 2b) se courbent en s'écartant du groupe moteur (1) de véhicule automobile dans la zone desdits supports (4a, 4b) de moteur.

4. Suspension selon l'une quelconque des revendications 1 à 3, ***caractérisée en ce que*** lesdits supports (4a, 4b) de moteur respectifs comprennent une cavité revêtue de caoutchouc, ménagée dans un logement métallique en forme de cupule, ladite cavité étant agencée pour recevoir un élément de montage respectif (3a, 3b) faisant saillie dudit groupe moteur (1) de véhicule à moteur.

5. Véhicule automobile ***caractérisé en ce qu*'**il comprend une suspension pour un groupe moteur avant (1), monté transversalement, de véhicule automobile, qui est disposé dans une structure (2) de châssis automobile entre deux éléments latéraux avant (2a, 2b) selon l'une quelconque des revendications précédentes.

6. Procédé de suspension d'un groupe moteur avant (1), monté transversalement, de véhicule automobile, dans une structure (2) de châssis automobile entre deux éléments latéraux avant (2a, 2b), comprenant les étapes de : agencement d'un support de moteur résilient respectif (4a, 4b) au niveau de chaque élément latéral (2a, 2b) ; agencement desdits supports (4a, 4b) de moteur pour recevoir un élément de montage respectif (3a, 3b) faisant saillie dudit groupe moteur (1) de véhicule automobile ; lesdits supports (4a, 4b) de moteur comportant des moyens pour limiter le mouvement du groupe moteur (1) de véhicule automobile dans une direction longitudinale (±X) du véhicule, ***caractérisé en ce que*** le support (4a) de moteur côté gauche possède des moyens pour limiter le déplacement du groupe moteur (1) de véhicule automobile en direction (-Y) du côté gauche du véhicule, et le support (4b) de moteur côté droit possède des moyens pour limiter le déplacement du groupe moteur (1) de véhicule automobile en direction (+Y) du côté droit du véhicule ; équipement de chaque élément latéral respectif (2a, 2b) avec des moyens pour obliger les éléments latéraux à se courber en s'écartant du groupe moteur (1) de véhicule automobile à la suite du choc d'une collision agissant sur ledit élément latéral respectif (2a, 2b), après quoi le support de moteur associé respectif (4a, 4b), par absorption des charges abusives dans les directions du côté gauche du véhicule et du côté droit du véhicule (±Y) qui sont divisées de telle sorte que le mouvement extrême du groupe moteur (1) de véhicule automobile en direction (-Y) du côté gauche du véhicule soit limité seulement par le support (4a) de moteur côté gauche, et le mouvement extrême du groupe moteur (1) de véhicule automobile en direction (+Y) du côté droit du véhicule soit limité seulement par le support (4b) de moteur côté droit, provoquera la libération des éléments de montage (3a, 3b) des supports de moteur associés (4a, 4b).
